(19) Europäisches Patentamt European Patent Office Office européen des brevets

(11) EP 4 447 312 A2

(12) EUROPEAN PATENT APPLICATION

(43) Date of publication:
16.10.2024 Bulletin 2024/42

(51) International Patent Classification (IPC):
**H02P 29/024** (2016.01)

(21) Application number: 24196463.4

(52) Cooperative Patent Classification (CPC):
**H02P 8/36; H02P 29/024;** F16K 31/046

(22) Date of filing: 06.08.2021

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 28.08.2020 JP 2020144111
28.08.2020 JP 2020144112

(62) Document number(s) of the earlier application(s) in accordance with Art. 76 EPC:
**21861204.2 / 4 207 581**

(71) Applicant: **Panasonic Intellectual Property Management Co., Ltd.**
**Osaka-shi, Osaka 540-6207 (JP)**

(72) Inventors:
• **NIWA, Jumpei**
**540-6207 Osaka (JP)**

• **HORIIKE, Yoshio**
**540-6207 Osaka (JP)**
• **TOYOTA, Koichi**
**540-6207 Osaka (JP)**

(74) Representative: **SSM Sandmair Patentanwälte Rechtsanwalt Partnerschaft mbB Joseph-Wild-Straße 20 81829 München (DE)**

Remarks:
This application was filed on 26.08.2024 as a divisional application to the application mentioned under INID code 62.

(54) **STEPPING MOTOR ABNORMALITY DETECTING DEVICE**

(57) To detect an abnormality in a stepping motor due to wire snapping or valve sticking even in an unstable operating environment. The stepping motor abnormality detecting device includes: a stepping motor driver (3) that outputs a drive pulse to drive a stepping motor (4); a power source (1) that supplies electric power to the stepping motor driver (3); a current level detector (2) that detects a level of a current flowing through the stepping motor driver (3); a first storage (6) that stores a first current level that is detected by the current level detector (2) at a first timing; a second storage (7) that stores a second current level that is detected by the current level detector (2) at a second timing that is apart from the first timing by a predetermined time width or greater; and a determiner (8) that determines that there is an abnormality in operation of the stepping motor (4) in a case where a difference between the first current level and the second current level is greater than or equal to a predetermined value.

[Figure 1]

EP 4 447 312 A2

**Description**

**Technical Field**

The present disclosure relates to a device for detecting an abnormality that occurs in driving a stepping motor. The present disclosure particularly relates to a device for detecting an abnormality in a stepping motor used in a bi-directional valve that is used in a gas meter and that opens and closes a flow of gas.

**Background Art**

Patent Literature 1 discloses a shutoff valve device that determines whether a stepping motor is in a stall state or a step-out state.

The shutoff valve device includes: a drive control circuit that performs drive control of a stepping motor; and a valve action abnormality circuit that determines whether the stepping motor is in a stall state or a step-out state. Accordingly, the shutoff valve device can determine whether the stepping motor is in a stall state or a step-out state by comparing the maximal value in a drive voltage waveform detected from the stepping motor, or comparing the wave height of the maximal value, with a predetermined threshold value.

Patent Literature 2 discloses a method of detecting a step-out of a stepping motor. In the step-out detecting method, in a stepping motor driver that drives the stepping motor, the waveform of the motor current is converted into a rectangular wave signal, and the rectangular wave signal is converted into a voltage signal. Then, a voltage value obtained from the voltage signal is compared with a reference voltage, and thereby whether or not the stepping motor is in a step-out state can be determined.

**Citation List**

**Patent Literature**

PTL 1: Japanese Laid-Open Patent Application Publication No. 2006-118642
PTL 2: Japanese Laid-Open Patent Application Publication No. 1999-187697

**Summary of Invention**

Patent Literature 1 and Patent Literature 2 both disclose a technique that focuses on a difference in a current/voltage waveform between the normal state and the step-out state. In these techniques, the difference in the waveform can be detected in the case of a stable step-out state. However, in an actual operating environment, it is often the case that unstable operation of the stepping motor repeatedly occurs, for example, the stepping motor rotates forward and backward slightly. In such a case, the difference in the waveform is unclear, and it is difficult to distinguish the normal state and the step-out state from each other.

The present disclosure provides a stepping motor abnormality detecting device capable of detecting an abnormality in a stepping motor due to wire snapping or valve sticking even in an unstable operating environment.

A stepping motor abnormality detecting device according to the present disclosure includes: a stepping motor driver that outputs a drive pulse to drive a stepping motor; a power source that supplies electric power to the stepping motor driver; a current level detector that detects a level of a current flowing through the stepping motor driver; a first storage that stores a first current level that is detected by the current level detector at a first timing; a second storage that stores a second current level that is detected by the current level detector at a second timing that is apart from the first timing by a predetermined time width or greater; and a determiner that determines that there is an abnormality in operation of the stepping motor in a case where a difference between the first current level and the second current level is greater than or equal to a predetermined value.

A stepping motor abnormality detecting device according to the present disclosure includes: a stepping motor driver that outputs a drive pulse to drive a stepping motor; a frequency change instructor that gives an instruction to change a frequency of the drive pulse; a power source that supplies electric power to the stepping motor driver; a current level detector that detects a level of a current flowing through the stepping motor driver; a first storage that stores a first current level that is detected by the current level detector at a first timing that is before the instruction to change the frequency is given from the frequency change instructor; a second storage that stores a second current level that is detected by the current level detector at a second timing that is after the instruction to change the frequency is given from the frequency change instructor; and a determiner that determines that there is an abnormality in operation of the stepping motor in a case where a difference between the first current level and the second current level is less than a predetermined value.

The present disclosure provides a stepping motor abnormality detecting device capable of detecting an abnormality in a stepping motor even in an unstable operating environment.

**Brief Description of Drawings**

FIG. 1 is a block diagram showing one example of the configuration of a stepping motor abnormality detecting device according to Embodiment 1.
FIG. 2 is a signal diagram showing one example of output values of an analog-digital converter in Embodiment 1.
FIG. 3 shows one example of drive pulses and signal waveforms at respective components in Embodiment 1.
FIG. 4 is a block diagram showing one example of the configuration of a stepping motor abnormality detecting device according to Embodiment 2.
FIG. 5 is a signal diagram showing one example of output values of the analog-digital converter in Embodiment 2.
FIG. 6 shows one example of drive pulses and signal waveforms at respective components in Embodiment 2.

**Description of Embodiments**

Hereinafter, embodiments of the present disclosure are described with reference to the drawings. In the embodiments described below, a description that is more detailed than necessary is omitted in some cases. For example, detailed descriptions of well-known matters or redundant descriptions of substantially identical components are omitted in some cases. These omissions are made to avoid unnecessary redundancy in the description below and to allow those skilled in the art to readily understand the embodiments.

It should be noted that the accompanying drawings and the description below are provided to allow those skilled in the art to understand the present disclosure sufficiently, and the accompanying drawings and the following description are not intended to limit subject-matters described in the claims.

(Embodiment 1)

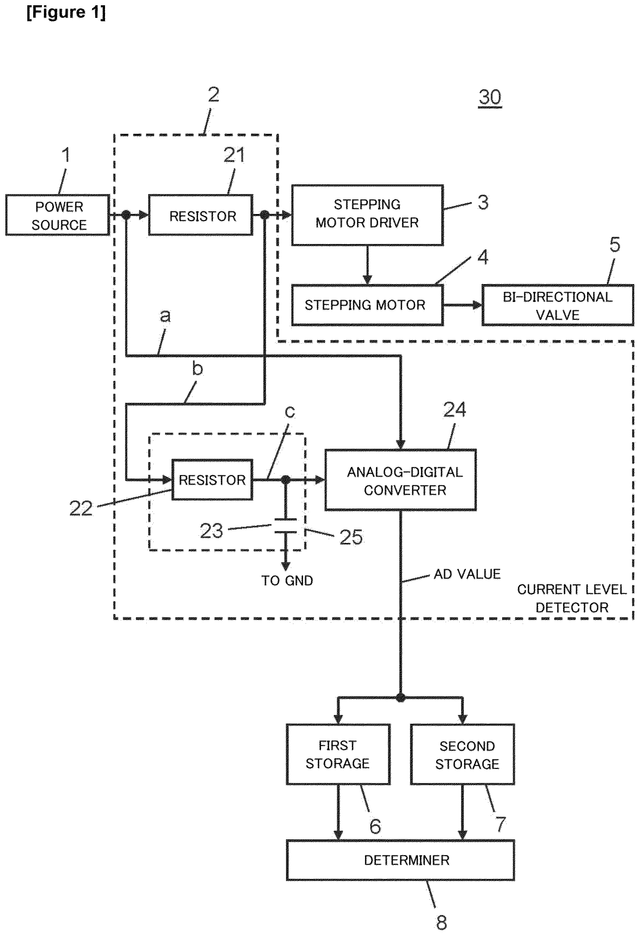

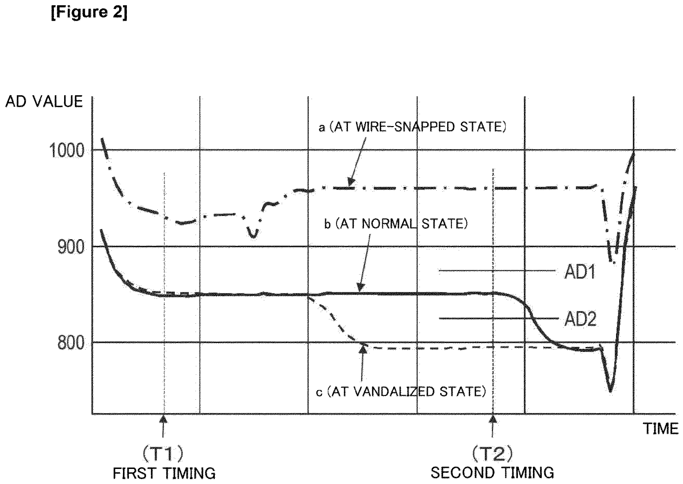

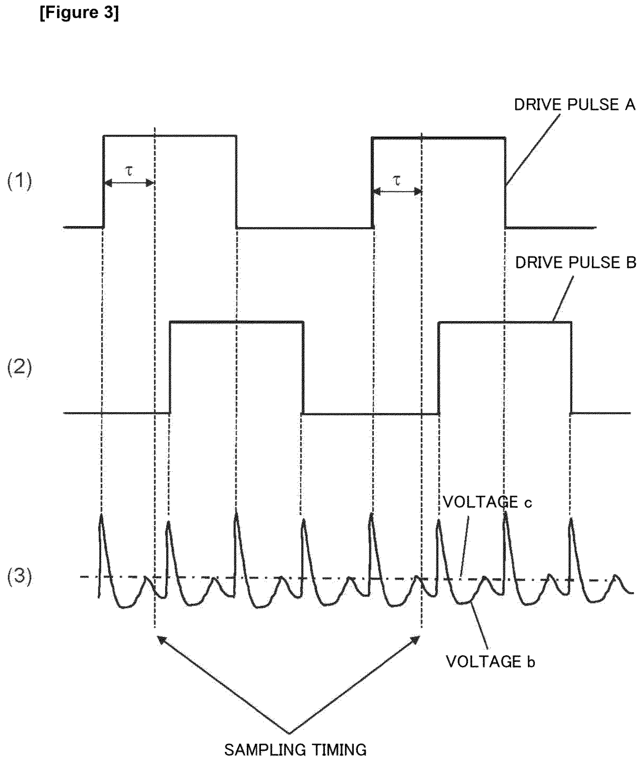

Hereinafter, Embodiment 1 is described by using FIG. 1 to FIG. 3. FIG. 1 is a block diagram showing one example of the configuration of a stepping motor abnormality detecting device 30 according to Embodiment 1. FIG. 2 and FIG. 3 are signal diagrams for describing an operation of detecting an abnormality in a stepping motor 4 in Embodiment 1. FIG. 2 is a signal diagram showing one example of output values of an analog-digital converter 24 in Embodiment 1. FIG. 3 shows one example of drive pulses and signal waveforms at respective components in Embodiment 1.

[1-1. Configuration]

Hereinafter, the configuration of the stepping motor abnormality detecting device 30 according to Embodiment 1 is described with reference to FIG. 1. An output voltage (voltage a) from a power source 1 is applied to a stepping motor driver 3 via a current level detector 2. An output from the stepping motor driver 3 is inputted to the stepping motor 4. Then, the stepping motor 4 rotates to cause a bi-directional valve 5 to perform an opening or closing action.

The current level detector 2 outputs an AD value by utilizing the fact that a potential difference between both ends of a resistor 21, i.e., a potential difference between the voltage a and voltage b, is proportional to a current flowing through the resistor 21. Specifically, the potential difference between both ends of the resistor 21 (i.e., the potential difference between the voltage a and voltage b) is converted by the analog-digital converter 24 into a digital signal, and is outputted as an AD value. An integrating circuit 25 includes a resistor 22 and a capacitor 23. By integrating the current flowing from the resistor 21 to the stepping motor driver 3, the integrating circuit 25 smooths a change in the output signal b from the resistor 21. It should be noted that the resistor 21 is a first resistor, and the resistor 22 is a second resistor. Then, an output from the integrating circuit 25 is inputted to the analog-digital converter 24 as a voltage c.

Outputs from the analog-digital converter 24 (i.e., AD values) are inputted to a first storage 6 and a second storage 7. The AD values at particular timings are stored in the first storage 6 and the second storage 7, respectively. These timings will be described below. Then, a determiner 8 determines whether or not there is an abnormality in the stepping motor 4 by comparing the stored value in the first storage 6 and the stored value in the second storage 7.

The stepping motor abnormality detecting device 30 in the present embodiment is incorporated in a gas meter. The bi-directional valve 5 is used as a shutoff valve that shuts off or opens a flow of gas. In the case where the stepping motor abnormality detecting device 30 is thus incorporated in the gas meter, for example, a lithium battery serving as a

3

power source for the gas meter is used as the power source 1.

The stepping motor 4 includes a plurality of coils. In the stepping motor 4, the motor rotation direction is determined by the states of pulses applied to the respective coils. Then, the motor rotation direction determines whether the bi-directional valve performs an opening action or a closing action. Although not illustrated in FIG. 1, the stepping motor abnormality detecting device 30 in the present embodiment includes a controller that controls the entire operation described below.

[1-2. Operation]

Hereinafter, operation of the stepping motor abnormality detecting device 30 in the present embodiment, which is configured as above, is described with reference to FIG. 2.

FIG. 2 graphs outputs (AD values) from the analog-digital converter 24 when the bi-directional valve 5 of the stepping motor abnormality detecting device 30 of the present embodiment performs a closing action in a case where the bi-directional valve 5 is used as a shutoff valve of the gas meter.

The analog-digital converter 24 converts the output from the integrating circuit 25 (i.e., the voltage c) into a digital signal while using the output from the power source 1 (i.e., the voltage a) as a reference voltage. Specifically, a value obtained by dividing the voltage c by the voltage a is multiplied by 1024, and a resulting integer value is outputted from the analog-digital converter 24 as an AD value. In FIG. 2, the vertical axis represents AD value, and the horizontal axis represents time.

A first timing (T1) is a timing immediately after the stepping motor 4 starts operating in response to drive pulses outputted from the stepping motor driver 3. A second timing (T2) is a timing immediately before closing of a gas passage by the bi-directional valve 5 is completed. The frequency of the drive pulses is kept at a constant frequency during the driving of the stepping motor 4. It should be noted that the AD value detected by the current level detector 2 at the first timing (T1) is a first current level, and the AD value detected by the current level detector 2 at the second timing (T2) is a second current level.

A graph b, which is illustrated by a solid line in FIG. 2, indicates changes in the AD value in a case where the bi-directional valve 5 operates normally. During a period in which the bi-directional valve 5 operates, i.e., during a period in which the stepping motor 4 rotates normally, there is no change in the current flowing thorough the resistor 21, and there is almost no difference between the AD value at the first timing (T1) and the AD value at the second timing (T2). It should be noted that, in the graph b, the AD value decreases immediately after the second timing (T2). The reason for this is that since the gas passage has been closed by the bi-directional valve 5 and the bi-directional valve 5 has stopped operating, the load on the stepping motor 4 has increased and the current flowing through the resistor 21 has increased.

A graph a, which is illustrated by a one-dot chain line in FIG. 2, indicates changes in the AD value in a case where one of the two coils of the stepping motor 4 is snapped. In this case, the current flowing through the resistor 21 becomes a half of that in the case of normal operation, and thereby the AD value increases. Also, in the case where one of the two coils is snapped, the stepping motor 4 operates in an unstable manner, which causes a change in the load on the stepping motor 4. Accordingly, when one of the coils is snapped, the current flowing through the resistor 21 changes, and consequently, as shown in the graph a, a difference occurs between the AD value at the first timing (T1) and the AD value at the second timing (T2).

A graph c, which is illustrated by a dotted line in FIG. 2, indicates changes in the AD value in a case where an object gets stuck in the gas passage of the gas meter due to vandalism or the like, causing malfunctioning of the bi-directional valve 5, and consequently, the bi-directional valve 5 has stopped operating in the middle of its closing action. When the bi-directional valve 5 stops operating, the load on the stepping motor 4 increases, which causes an increase in the current flowing through the resistor 21, and consequently, the AD value becomes less than that in the case of normal operation. That is, when the bi-directional valve 5 stops operating between the first timing (T1) and the second timing (T2) due to vandalism or the like, a difference occurs between the AD value at the first timing (T1) and the AD value at the second timing (T2).

As described above, in the stepping motor abnormality detecting device 30 of the present embodiment, during normal operation, there is no significant difference between the AD value at the first timing (T1) and the AD value at the second timing (T2). However, in a case where the operation of the bi-directional valve 5 becomes unstable or stops due to coil snapping or vandalism or the like, a significant difference occurs between the AD value at the first timing (T1) and the AD value at the second timing (T2).

In light of the above, the AD value at the first timing (T1) is stored in the first storage 6, and the AD value at the second timing (T2) is stored in the second storage 7. The determiner 8 calculates an absolute value of the difference between the AD value stored in the first storage 6 and the AD value stored in the second storage 7, and compares the absolute value with a predetermined value. In a case where the calculated absolute value of the difference is greater than or equal to the predetermined value, the determiner 8 determines that there is an abnormality in the operation of the stepping motor 4.

In the above description, the first timing (T1) is a timing immediately after the stepping motor 4 starts operating, and the second timing (T2) is a timing immediately before the end of the closing action of the bi-directional valve 5. However, the first timing and the second timing in the present disclosure are not at all limited to these timings. Having said that, the greater the interval between the first timing (T1) and the second timing (T2), the more likely it is that the occurrence of an abnormality due to a vandalism or the like is missed. Therefore, it is desirable to suitably set these timings by taking such a factor into consideration.

Further, in the above description, the first timing (T1) and the second timing (T2) are assumed to be fixed timings. However, the present disclosure is not thus limited. For example, the maximum value of the AD value during a period from a point immediately after the stepping motor 4 starts operating to a point immediately before the end of the closing action of the bi-directional valve 5 may be stored in the first storage 6 as the AD value at the first timing (T1). Also, the minimum value of the AD value during this period may be stored in the second storage 7 as the AD value at the second timing (T2).

Next, a relationship among the drive pulses to drive the stepping motor 4, the voltage b, and the voltage c is described with reference to FIG. 3. In FIG. 3, the vertical axis represents a voltage level, and the horizontal axis represents time.

The stepping motor 4 includes two coils that are a first coil and a second coil. In FIG. 3, (1) shows the waveform of a drive pulse A applied to one of the two coils of the stepping motor 4. Also in FIG. 3, (2) shows the waveform of a drive pulse B applied to the other one of the two coils of the stepping motor 4. Further, in FIG. 3, (3) shows the waveform of the voltage b illustrated by a solid line, and shows the waveform of the voltage c illustrated by a one-dot chain line.

Specifically, the drive pulse A drives the first coil of the stepping motor 4, and the drive pulse B drives the second coil of the stepping motor 4. The phase of the drive pulse B lags the phase of the drive pulse A by 90 degrees. The rotation direction of the stepping motor 4 is determined based on whether the phase of the drive pulse B lags the phase of the drive pulse A by 90 degrees or leads the phase of the drive pulse A by 90 degrees.

The voltage b shown in (3) of FIG. 3 corresponds to the waveform of the current flowing through the stepping motor 4. The stepping motor 4 is a coil load, and the waveform of the current flowing through the coil is a differential waveform such as the one exhibited by the voltage b. Accordingly, without using the integrating circuit 25, which includes the resistor 22 and the capacitor 23, the voltage b can be converted into an AD value by directly inputting the voltage b to the analog-digital converter 24. In this case, however, the AD value significantly varies depending on where on a drive pulse a sampling timing is set in the analog-digital converter 24.

Therefore, in a case where the voltage b is converted into an AD value without using the integrating circuit 25, it is important to set the sampling timing as a constant timing in relation to the drive pulse. In this example, a timing that is delayed from the rising edge of the drive pulse A by a time $\tau$ is set as an AD conversion timing for the analog-digital converter 24. It should be noted that in the case of AD-converting the voltage c via the integrating circuit 25, the aforementioned influence of the AD conversion timing on the AD value can be reduced advantageously.

It should be noted that FIG. 2 graphs chronologically arranging AD values each obtained at an AD conversion timing described above with reference to FIG. 3.

The determiner 8 may determine that there is an abnormality in the operation of the stepping motor in a case where the second current level is out of a predetermined range. Specifically, the following determination criteria may be additionally set for the determiner 8: in a case where the AD value at the second timing (T2) is greater than or equal to a first AD value (AD 1 in FIG. 2), the determiner 8 may determine that wire snapping has occurred; and in a case where the AD value at the second timing (T2) is less than or equal to a second AD value (AD2 in FIG. 2), which is less than the first AD value, the determiner 8 may determine that the bi-directional valve has stopped operating due to vandalism or the like. Configuring the determiner 8 in such a manner makes it possible to more accurately detect an abnormality in the stepping motor 4 in the stepping motor abnormality detecting device 30. It should be noted that suitable values relative to the AD value at the normal state may be preset as AD1 and AD2.

[1-3. Advantageous Effects, etc.]

As described above, the stepping motor abnormality detecting device 30 in the present embodiment is capable of detecting an abnormality in the stepping motor 4 highly precisely even in a case where the operation of the stepping motor 4 becomes unstable due to, for example, wire snapping or vandalism.

In the present embodiment, a method of detecting an abnormality in the stepping motor 4 when the bi-directional valve 5 performs a closing action has been described, whereas the description of the method when the bi-directional valve 5 performs an opening action is omitted. It should be noted that also when the bi-directional valve 5 performs an opening action, an abnormality in the stepping motor 4 can be detected in a manner similar to that when the bi-directional valve 5 performs a closing action.

(Embodiment 2)

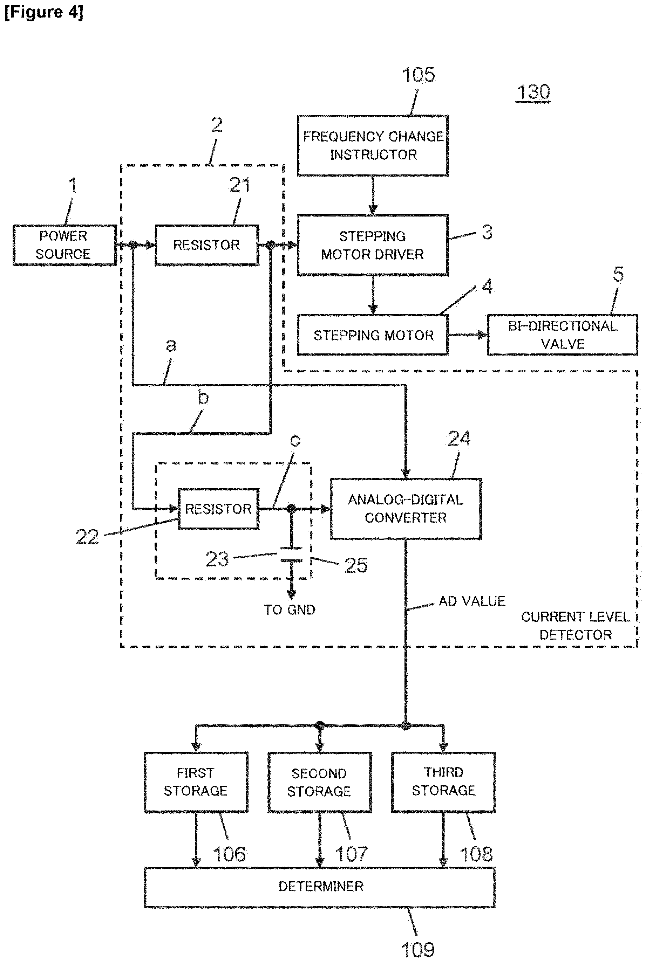

Hereinafter, Embodiment 2 is described with reference to FIG. 4 to FIG. 6. Although a stepping motor abnormality detecting device 130 according to Embodiment 2 has substantially the same functions as those of the stepping motor abnormality detecting device 30 of Embodiment 1, there are some differences between the stepping motor abnormality detecting device 30 and the stepping motor abnormality detecting device 130. Hereinafter, these differences are described. In Embodiment 2, components that operate in substantially the same manner as the components of the stepping motor abnormality detecting device 30 of Embodiment 1 are denoted by the same reference signs as those used in Embodiment 1.

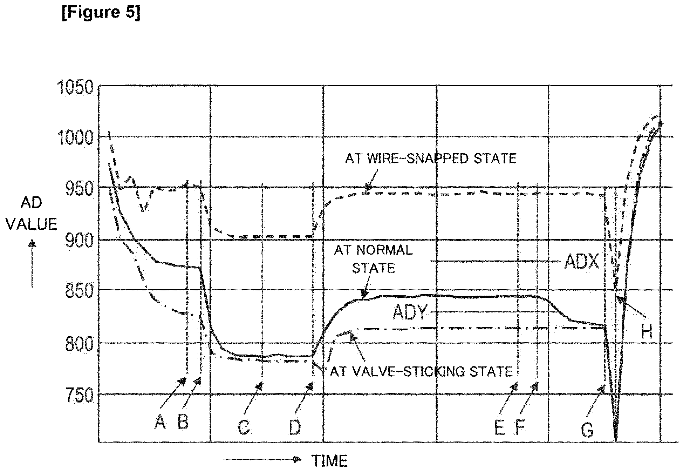

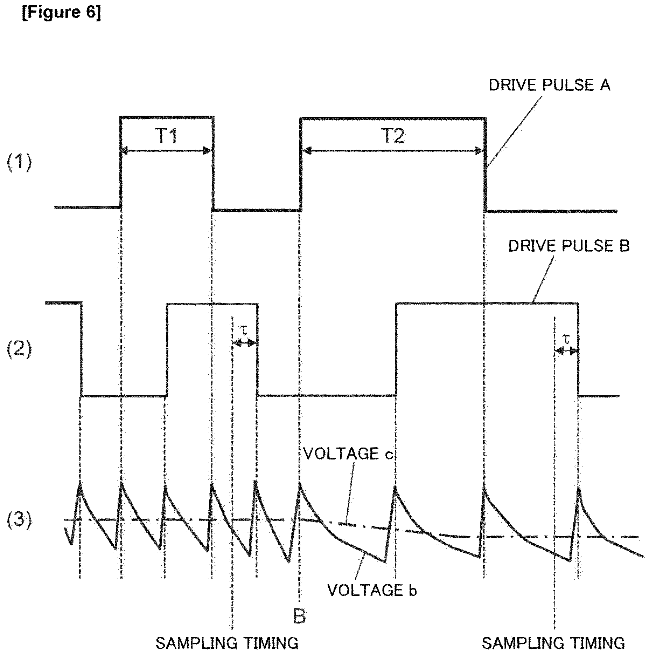

FIG. 4 is a block diagram showing one example of the configuration of the stepping motor abnormality detecting device 130 according to Embodiment 2. FIG. 5 and FIG. 6 are signal diagrams for describing an operation of detecting an abnormality in the stepping motor 4 in Embodiment 2. FIG. 5 is a signal diagram showing one example of output values of the analog-digital converter 24 in Embodiment 2. FIG. 6 shows one example of drive pulses and signal waveforms at respective components in Embodiment 2.

[2-1. Configuration]

Hereinafter, the configuration of the stepping motor abnormality detecting device 130 according to Embodiment 2 is described with reference to FIG. 4. An output voltage (voltage a) from the power source 1 is applied to the stepping motor driver 3 via the current level detector 2. An output from the stepping motor driver 3 is inputted to the stepping motor 4. Then, the stepping motor 4 rotates to cause the bi-directional valve 5 to perform an opening or closing action. A frequency change instructor 105 is connected to the stepping motor driver 3. The frequency change instructor 105 outputs, to the stepping motor driver 3, an instruction to change the frequency of drive pulses outputted from the stepping motor driver 3 to the stepping motor 4.

The current level detector 2 outputs an AD value by utilizing the fact that a potential difference between both ends of the resistor 21, i.e., a potential difference between the voltage a and voltage b, is proportional to a current flowing through the resistor 21. Specifically, the potential difference between both ends of the resistor 21 (i.e., the potential difference between the voltage a and voltage b) is converted by the analog-digital converter 24 into a digital signal, and is outputted as an AD value. The integrating circuit 25 includes the resistor 22 and the capacitor 23. By integrating the current flowing from the resistor 21 to the stepping motor driver 3, the integrating circuit 25 smooths a change in the voltage b. It should be noted that the resistor 21 is the first resistor, and the resistor 22 is the second resistor. Then, an output from the integrating circuit 25 is inputted to the analog-digital converter 24 as the voltage c.

Outputs (AD values) from the analog-digital converter 24 are inputted to a first storage 106, a second storage 107, and a third storage 108. The AD values at particular timings are stored in the first storage 106, the second storage 107, and the third storage 108, respectively. These timings will be described below. Then, a determiner 109 determines whether or not there is an abnormality in the stepping motor 4 by comparing the stored value in the first storage 106, the stored value in the second storage 107, and the stored value in the third storage 108.

The stepping motor abnormality detecting device 130 in the present embodiment is incorporated in a gas meter. The bi-directional valve 5 is used as a shutoff valve that shuts off or opens a flow of gas. In the case where the stepping motor abnormality detecting device 130 is thus incorporated in the gas meter, for example, a lithium battery serving as a power source for the gas meter is used as the power source 1.

The stepping motor 4 includes a plurality of coils. In the stepping motor 4, the motor rotation direction is determined by the states of pulses applied to the respective coils. Then, the motor rotation direction determines whether the bi-directional valve performs an opening action or a closing action. Although not illustrated in FIG. 4, the stepping motor abnormality detecting device 130 in the present embodiment includes a controller that controls the entire operation described below.

[2-2. Operation]

Hereinafter, operation of the stepping motor abnormality detecting device 130 in the present embodiment, which is configured as above, is described with reference to FIG. 5.

FIG. 5 graphs changes that occur in outputs (AD values) from the analog-digital converter 24 when the bi-directional valve 5 of the stepping motor abnormality detecting device 130 of the present embodiment performs a shutoff action in a case where the bi-directional valve 5 is used as a shutoff valve of the gas meter. In FIG. 5, a solid line indicates the AD value during normal operation of the bi-directional valve 5 (i.e., during a normal state); a dotted line indicates the AD value when snapping of a coil of the stepping motor 4 occurs; and a one-dot chain line indicates the AD value when sticking of the bi-directional valve 5 occurs.

The analog-digital converter 24 converts the output from the power source 1 (i.e., the voltage a) into a digital signal while using the output from the integrating circuit 25 (i.e., the voltage c) as a reference voltage. Specifically, a value obtained by dividing the voltage c by the voltage a is multiplied by 1024, and a resulting integer value is outputted from the analog-digital converter 24 as an AD value. In FIG. 5, the vertical axis represents the AD value, and the horizontal axis represents time.

There is a timing A, which is a timing in a period in which the frequency of the drive pulses inputted to the stepping motor 4 is 60 Hz. The frequency of the drive pulses inputted to the stepping motor 4 from the stepping motor driver 3 is switched at a timing B in accordance with an instruction from the frequency change instructor 105. For example, in accordance with the instruction from the frequency change instructor 105, the frequency of the drive pulses inputted to the stepping motor 4 from the stepping motor driver 3 is switched from 60 Hz to 30 Hz. As a result, the driving torque of the stepping motor 4 increases. There is also a timing C, which is a timing in a period in which the frequency of the drive pulses inputted to the stepping motor 4 is 30 Hz. The frequency of the drive pulses inputted to the stepping motor 4 from the stepping motor driver 3 is switched at a timing D in accordance with an instruction from the frequency change instructor 105. For example, the pulse frequency is switched from 30 Hz to 50 Hz. Further, there is a timing E, which is a timing in a period in which the frequency of the drive pulses inputted to the stepping motor 4 is 50 Hz and in which the closing action of the bi-directional valve 5 has not yet ended. The closing action of the bi-directional valve 5 ends at a timing F. Then, at a timing G, the drive pulses outputted from the stepping motor driver 3 are turned OFF, and the current flowing through the stepping motor 4 becomes zero.

For example, a lithium battery is used as the power source 1. Such a power source has internal resistance. Accordingly, when the current flowing through the stepping motor 4 becomes zero, the voltage a increases. At the time, the voltage c, which is the output from the integrating circuit 25, is kept to the same voltage value as that in a period before the current flowing through the stepping motor 4 becoming zero. Accordingly, as shown in FIG. 5, at a timing H, which is a timing immediately after the drive pulses are turned OFF, the AD value rapidly decreases. Thereafter, in accordance with discharging of the integrating circuit 25, the AD value gradually increases, and becomes the same value as that in a period in which the current is zero (i.e., becomes 1024).

Next, a relationship among the waveforms of the drive pulses to drive the stepping motor 4, the output from the resistor 21 (i.e., the voltage b), and the output from the integrating circuit 25 (i.e., the voltage c) is described with reference to FIG. 6.

In FIG. 6, the vertical axis represents a voltage level, and the horizontal axis represents time. FIG. 6 shows the waveforms of the drive pulses when the pulse frequency is, in a state where the stepping motor 4 is rotating normally and the bi-directional valve 5 is operating normally, switched from 60 Hz to 30 Hz at the timing B shown in FIG. 5.

The stepping motor 4 includes two coils that are the first coil and the second coil. In FIG. 6, (1) shows the waveform of the drive pulse A applied to one of the two coils of the stepping motor 4. Also, in FIG. 6, (2) shows the waveform of the drive pulse B applied to the other one of the two coils of the stepping motor 4. Each of the drive pulses shown in (1) and (2) of FIG. 6 has a pulse width T1, which is a pulse width of 60 Hz, and a pulse width T2, which is a pulse width of 30 Hz. Although T1 and T2 are not indicated in (2) of FIG. 6, the narrower pulse width is T1, and the wider pulse width is T2 in (2) of FIG. 6. Further, in FIG. 6, (3) shows the waveform of the voltage b illustrated by a solid line, and shows the waveform of the voltage c illustrated by a one-dot chain line.

Specifically, the drive pulse A drives the first coil of the stepping motor 4, and the drive pulse B drives the second coil of the stepping motor 4. The phase of the drive pulse B, which drives the second coil, lags the phase of the drive pulse A, which drives the first coil, by 90 degrees. The rotation direction of the stepping motor 4 is determined based on whether the phase of the drive pulse B, which drives the second coil, lags the phase of the drive pulse A, which drives the first coil, by 90 degrees or leads the phase of the drive pulse A by 90 degrees.

The voltage b shown in (3) of FIG. 6 corresponds to the waveform of the current flowing through the stepping motor 4. The stepping motor 4 is a coil load, and the coil has an inductor component and a resistor component. Accordingly, due to the inductor component of the coil, the waveform of the current flowing through the coil is a differential waveform such as the one exhibited by the voltage b. In a case where the period of a drive pulse that drives the coil becomes longer, i.e., in a case where the frequency of the drive pulse becomes lower, an influence of the inductor component on the impedance of the coil is reduced.

Accordingly, the average current flowing through the stepping motor 4 is greater after the timing B than before the timing B. It should be noted that the timing B shown in FIG. 6 is the same as the aforementioned timing B shown in FIG. 5, and is a timing at which the pulse frequency is switched from the higher frequency (the pulse width T1) to the lower frequency (the pulse width T2). Accordingly, the voltage b, which is the output from the resistor 21, is less after the timing B than before the timing B, and the voltage c obtained from the integration by the integrating circuit 25 is less after the timing B than before the timing B. That is, as the operation of the stepping motor 4, the lower the frequency of the pulses that drive the coils, the wider the width of the pulses and the greater the average current flowing through the stepping motor 4. Consequently, the driving torque of the stepping motor 4 increases.

Described next is a case where the stepping motor 4 does not rotate for the reason that the bi-directional valve 5 does not move due to, for example, valve sticking. In such a case, energy stored as electromagnetic energy in the coil inductance component of the stepping motor 4 is also consumed as energy for rotating the stepping motor 4. Accordingly, the crest value of the voltage b decreases, and the coil impedance is brought closer to the impedance of the resistor component. Hereinafter, a state where the bi-directional valve 5 does not move due to, for example, valve sticking is simply referred to as a "valve-sticking state". Accordingly, at the valve-sticking state, a change in the current flowing through the coils of the stepping motor 4, the change occurring due to a change in the pulse frequency, is less than at the normal state.

Next, a case where one of the two coils of the stepping motor 4 is snapped is described. In such a case, the current flowing through the stepping motor 4 becomes a half of that flowing at the normal state. Accordingly, a change in the current flowing through the stepping motor 4, the change occurring due to a change in the pulse frequency, is also a half of that occurring at the normal state. Hereinafter, a state where a coil is snapped is simply referred to as a "wire-snapped state".

For the reasons described above, as shown in FIG. 5, between before and after the timing B, at which the frequency of the drive pulses inputted to the stepping motor 4 changes from the higher frequency to the lower frequency, the AD value changes significantly at the normal state, but the change in the AD value at the valve-sticking state is less than the change in the AD value at the normal state. Also, the change in the AD value at the wire-snapped state is substantially a half of the change in the AD value at the normal state.

For the same reasons, between before and after the timing D, at which the frequency of the drive pulses inputted to the stepping motor 4 changes from the lower frequency to the higher frequency, the AD value changes significantly at the normal state, but the change in the AD value at the valve-sticking state is less than the change in the AD value at the normal state. Also, the change in the AD value at the wire-snapped state is substantially a half of the change in the AD value at the normal state.

At the timing F, the frequency of the drive pulses inputted to the stepping motor 4 does not change. At the timing F, however, since the action of closing the gas passage by the bi-directional valve 5 has ended, the rotation of the stepping motor 4 is kept stopped. Accordingly, as the time elapses, the AD value gradually becomes closer and closer to the AD value at the valve-sticking state.

Next, a method of determining whether or not there is an abnormality in the stepping motor 4 by the determiner 109 is described. It should be noted that valve sticking is, strictly speaking, not an abnormality in the stepping motor 4. However, an occurrence of valve sticking can be determined based on the current flowing through the stepping motor 4. Therefore, in the description herein, valve sticking is included in the definition of an abnormality in the stepping motor 4.

First, the first storage 106 stores the AD value at the timing A shown in FIG. 5 as AD1, which is the AD value of a period in which the frequency of the drive pulses inputted to the stepping motor 4 is 60 Hz. Next, the second storage 107 stores the AD value at the timing C shown in FIG. 5 as AD2, which is the AD value of a period in which the pulse frequency is 30 Hz. The third storage 108 stores the AD value at the timing E shown in FIG. 5 as AD3, which is the AD value of a period in which the pulse frequency is 50 Hz and a closing action of the bi-directional valve 5 has not ended yet.

At the time of abnormality in the stepping motor 4 (i.e., at the valve-sticking state or at the wire-snapped state), the determiner 109 determines that there is an abnormality in the operation of the stepping motor 4 by utilizing the fact that at time of abnormality in the stepping motor 4, a change in the AD value, the change occurring between before and after a timing at which the frequency of the drive pulses inputted to the stepping motor 4 is changed, is less than that at the normal state. Specifically, the determiner 109 calculates (AD1 - AD2) + (AD3 - AD2), and compares a result of the calculation with a predetermined value X. Then, if an equation 1 shown below holds true, the determiner 109 determines that there is an abnormality in the operation of the stepping motor 4 due to wire snapping or valve sticking.

$$((AD1 - AD2) + (AD3 - AD2)) < \text{predetermined value X} \qquad (\text{equation 1})$$

Although the above embodiment has described the configuration in which the determiner 109 determines whether or not there is an abnormality in the operation of the stepping motor 4 by using the three AD values, i.e., AD1, AD2, and AD3, the present disclosure is not limited to this configuration in any way. Alternatively, the determiner 109 may determine whether or not there is an abnormality in the operation of the stepping motor 4 by using two AD values, specifically, AD1 of the timing A and AD2 of the timing C. To be specific, if an equation 2 shown below holds true, the determiner 109 may determine that there is an abnormality in the operation of the stepping motor 4.

$$(AD1 - AD2) < \text{predetermined value Y} \qquad (\text{equation 2})$$

Further alternatively, the determiner 109 may determine whether or not there is an abnormality in the operation of the stepping motor 4 by using two AD values AD2 and AD3. To be specific, if an equation 3 shown below holds true, the determiner 109 may determine that there is an abnormality in the operation of the stepping motor 4.

$$(AD3 - AD2) < \text{predetermined value } Z \qquad \text{(equation 3)}$$

Yet further alternatively, the determiner 109 may determine that there is an abnormality in the operation of the stepping motor 4 in a case where the above equation 2 and equation 3 both hold true, i.e., in a case where both of the equations shown below hold true.

$$(AD1 - AD2) < \text{predetermined value } Y \qquad \text{(equation 2)}$$

$$(AD3 - AD2) < \text{predetermined value } Z \qquad \text{(equation 3)}$$

The predetermined value X, the predetermined value Y, and the predetermined value Z are preset values. The timings A, C, and E, at which the respective AD values are stored, are suitably set in accordance with the timings of changing the frequency of the drive pulses inputted to the stepping motor 4 and the timing of closing the bi-directional valve 5.

Yet further alternatively, the determiner 109 may determine whether or not there is an abnormality in the operation of the stepping motor 4 by using two AD values AD 1 and AD3 with the same method as that described above. The determiner 109 in the present embodiment can determine whether or not there is an abnormality in the operation of the stepping motor 4 by using AD values indicative of current levels at different timings of the pulse frequency that drives the stepping motor 4.

In a case where the voltage b is converted into an AD value by directly inputting the voltage b to the analog-digital converter 24 without using the integrating circuit that includes the resistor 22 and the capacitor 23, the AD value significantly varies depending on where on a drive pulse a sampling timing is set in the analog-digital converter 24.

Therefore, in a case where the voltage b is converted into an AD value without using the integrating circuit 25, it is important to set the sampling timing as a constant timing in relation to the drive pulse. For example, a timing that precedes, by a time $\tau$, the falling edge of the drive pulse B shown in FIG. 6 is set as the AD conversion timing for the analog-digital converter 24. It should be noted that in the case of AD-converting the voltage c via the integrating circuit 25, the aforementioned influence of the AD conversion timing on the AD value can be reduced advantageously.

It should be noted that FIG. 5 graphs chronologically arranged AD values each obtained at an AD conversion timing described above with reference to FIG. 6.

It should be noted that in a case where a current level detected at a predetermined timing is out of a predetermined range, the determiner 109 may determine that there is an abnormality in the operation of the stepping motor. Specifically, the following determination criteria may be additionally set for the determiner 109: in a case where the AD value at a predetermined timing (e.g., the timing E) is greater than or equal to a first predetermined value (ADX in FIG. 5), the determiner 109 may determine that wire snapping has occurred; and in a case where the AD value at the predetermined timing is less than or equal to a second predetermined value (ADY in FIG. 5) that is less than the first predetermined value, the determiner 109 may determine that the bi-directional valve 5 has stopped operating due to valve sticking or the like. Configuring the determiner 109 in such a manner makes it possible to more accurately detect an abnormality in the stepping motor 4 in the stepping motor abnormality detecting device 130.

It should be noted that suitable values relative to the AD value at the normal state may be preset as ADX and ADY.

[2-3. Advantageous Effects. etc.]

As described above, the stepping motor abnormality detecting device 130 in the present embodiment is capable of detecting an abnormality in the stepping motor 4 highly precisely even in a case where the operation of the stepping motor 4 becomes unstable due to, for example, wire snapping or valve sticking.

It should be noted that since the above embodiments describe examples of the technology of the present disclosure, various modifications, substitutions, additions, eliminations, etc., can be made within the scope of the claims and the equivalents thereof.

As described above, a stepping motor abnormality detecting device according to a first disclosure includes: a stepping motor driver that outputs a drive pulse to drive a stepping motor; a power source that supplies electric power to the stepping motor driver; a current level detector that detects a level of a current flowing through the stepping motor driver; a first storage that stores a first current level that is detected by the current level detector at a first timing; a second storage that stores a second current level that is detected by the current level detector at a second timing that is apart from the first timing by a predetermined time width or greater; and a determiner that determines that there is an abnormality in operation of the stepping motor in a case where a difference between the first current level and the second current level is greater than or equal to a predetermined value.

A stepping motor abnormality detecting device according to a second disclosure is configured such that, in the stepping motor abnormality detecting device according to the first disclosure, the current level detector includes an integrating circuit that integrates the current flowing through the stepping motor driver, and the current level detector detects an output from the integrating circuit.

A stepping motor abnormality detecting device according to a third disclosure is configured such that the stepping motor abnormality detecting device according to the second disclosure further includes a first resistor inserted between the power source and the stepping motor driver, wherein the integrating circuit integrates, by a capacitor via a second resistor, a voltage at a connection point where the first resistor and the stepping motor driver are connected to each other.

A stepping motor abnormality detecting device according to a fourth disclosure is configured such that, in the stepping motor abnormality detecting device according to any one of the first to third disclosures, each of the first timing and the second timing is a timing that is delayed from a rising edge of the drive pulse by a predetermined time.

A stepping motor abnormality detecting device according to a fifth disclosure is configured such that the stepping motor abnormality detecting device according to any one of the first to fourth disclosures further includes a bi-directional valve that operates by the stepping motor, wherein the first timing is set as a timing immediately after the bi-directional valve starts operating, and the second timing is set as a timing immediately before the bi-directional valve stops operating.

A stepping motor abnormality detecting device according to a sixth disclosure is configured such that, in the stepping motor abnormality detecting device according to any one of the first to fifth disclosures, the determiner determines that there is an abnormality in the operation of the stepping motor in a case where the second current level is out of a predetermined range.

A stepping motor abnormality detecting device according to a seventh disclosure includes: a stepping motor driver that outputs a drive pulse to drive a stepping motor; a frequency change instructor that gives an instruction to change a frequency of the drive pulse; a power source that supplies electric power to the stepping motor driver; a current level detector that detects a level of a current flowing through the stepping motor driver; a first storage that stores a first current level that is detected by the current level detector at a first timing that is before the instruction to change the frequency is given from the frequency change instructor; a second storage that stores a second current level that is detected by the current level detector at a second timing that is after the instruction to change the frequency is given from the frequency change instructor; and a determiner that determines that there is an abnormality in operation of the stepping motor in a case where a difference between the first current level and the second current level is less than a predetermined value.

A stepping motor abnormality detecting device according to an eighth disclosure is configured such that, in the stepping motor abnormality detecting device according to the seventh disclosure, the current level detector includes an integrating circuit that integrates the current.

A stepping motor abnormality detecting device according to a ninth disclosure is configured such that the stepping motor abnormality detecting device according to the eighth disclosure further includes a first resistor inserted between the power source and the stepping motor driver, wherein the integrating circuit integrates, by a capacitor via a second resistor, a voltage at a connection point where the first resistor and the stepping motor driver are connected to each other, and the current level detector detects the voltage integrated by the integrating circuit.

A stepping motor abnormality detecting device according to a tenth disclosure is configured such that, in the stepping motor abnormality detecting device according to any one of the seventh to ninth disclosures, also in a case where the level of the current detected at a predetermined timing is out of a predetermined range, the determiner determines that there is an abnormality in the operation of the stepping motor.

**Industrial Applicability**

The present disclosure is applicable, in particular, to a stepping motor that drives a bi-directional valve incorporated in a gas meter or the like.

The following examples listed below are directed to advantageous embodiments which represent separate and independent inventions.

A A stepping motor abnormality detecting device comprising:

a stepping motor driver that outputs a drive pulse to drive a stepping motor;
a power source that supplies electric power to the stepping motor driver;
a current level detector that detects a level of a current flowing through the stepping motor driver;
a first storage that stores a first current level that is detected by the current level detector at a first timing;
a second storage that stores a second current level that is detected by the current level detector at a second timing that is apart from the first timing by a predetermined time width or greater; and
a determiner that determines that there is an abnormality in operation of the stepping motor in a case where a difference between the first current level and the second current level is greater than or equal to a predetermined value.

B The stepping motor abnormality detecting device according to embodiment A, wherein

the current level detector includes an integrating circuit that integrates the current flowing through the stepping motor driver, and
the current level detector detects an output from the integrating circuit.

C The stepping motor abnormality detecting device according to embodiment B, further comprising a first resistor inserted between the power source and the stepping motor driver, wherein
the integrating circuit integrates, by a capacitor via a second resistor, a voltage at a connection point where the first resistor and the stepping motor driver are connected to each other.

D The stepping motor abnormality detecting device according to any one of embodiments A to C, wherein
each of the first timing and the second timing is a timing that is delayed from a rising edge of the drive pulse by a predetermined time.

E The stepping motor abnormality detecting device according to any one of embodiments A to D, further comprising a bi-directional valve that operates by the stepping motor, wherein

the first timing is set as a timing immediately after the bi-directional valve starts operating, and
the second timing is set as a timing immediately before the bi-directional valve stops operating.

F The stepping motor abnormality detecting device according to any one of embodiments A to E, wherein
the determiner determines that there is an abnormality in the operation of the stepping motor in a case where the second current level is out of a predetermined range.

G A stepping motor abnormality detecting device comprising:

a stepping motor driver that outputs a drive pulse to drive a stepping motor;
a frequency change instructor that gives an instruction to change a frequency of the drive pulse;
a power source that supplies electric power to the stepping motor driver;
a current level detector that detects a level of a current flowing through the stepping motor driver;
a first storage that stores a first current level that is detected by the current level detector at a first timing that is before the instruction to change the frequency is given from the frequency change instructor;
a second storage that stores a second current level that is detected by the current level detector at a second timing that is after the instruction to change the frequency is given from the frequency change instructor; and
a determiner that determines that there is an abnormality in operation of the stepping motor in a case where a difference between the first current level and the second current level is less than a predetermined value.

H The stepping motor abnormality detecting device according to embodiment G, wherein
the current level detector includes an integrating circuit that integrates the current.

I The stepping motor abnormality detecting device according to claim H, further comprising a first resistor inserted between the power source and the stepping motor driver, wherein

the integrating circuit integrates, by a capacitor via a second resistor, a voltage at a connection point where the first resistor and the stepping motor driver are connected to each other, and
the current level detector detects the voltage integrated by the integrating circuit.

J The stepping motor abnormality detecting device according to any one of embodiments G to I, wherein
also in a case where the level of the current detected at a predetermined timing is out of a predetermined range, the determiner determines that there is an abnormality in the operation of the stepping motor.

**Reference Signs List**

| | |
|---|---|
| 1 | power source |
| 2 | current level detector |
| 3 | stepping motor driver |
| 4 | stepping motor |
| 5 | bi-directional valve |
| 6 | first storage |
| 7 | second storage |
| 8 | determiner |
| 21 | resistor |
| 22 | resistor |
| 23 | capacitor |
| 24 | analog-digital converter |
| 25 | integrating circuit |
| 30 | stepping motor abnormality detecting device |
| 105 | frequency change instructor |
| 106 | first storage |
| 107 | second storage |
| 108 | third storage |
| 109 | determiner |
| 130 | stepping motor abnormality detecting device |

**Claims**

1. A stepping motor abnormality detecting device (30) comprising:

a stepping motor (4) including a plurality of coils;
a stepping motor driver (3) that is configured to output a plurality of drive pulses corresponding to the plurality of coils, respectively;
a power source (1) that is configured to supply electric power to the stepping motor driver (3);
a current level detector (2) that is configured to detect a level of a current flowing through the stepping motor driver (3);
a first storage (106) that is configured to store a first current level that is detected by the current level detector (2) at a first timing at which the plurality of drive pulses are outputted;
a second storage (107) that is configured to store a second current level that is detected by the current level detector (2) at a second timing at which the plurality of drive pulses are outputted, the second timing being apart from the first timing by a predetermined time width or greater; and
a determiner (109) that is configured to determine that there is an abnormality in operation of the stepping motor in a case where a difference between the first current level and the second current level is out of a predetermined value range, wherein
phases of the plurality of respective drive pulses are different from each other, and
each of the first timing and the second timing is a timing that is delayed from a rising edge of at least one of the plurality of drive pulses by a predetermined time.

2. The stepping motor abnormality detecting device (30) according to claim 1, wherein

the current level detector (2) includes an integrating circuit (25) that is configured to integrate the current flowing through the stepping motor driver (3), and
the current level detector (2) is configured to detect an output from the integrating circuit (25).

3. The stepping motor abnormality detecting device (30) according to claim 2, further comprising a first resistor (21) inserted between the power source (1) and the stepping motor driver (3), wherein
the integrating circuit (25) is configured to integrate, by a capacitor (23) via a second resistor (22), a voltage at a connection point where the first resistor (21) and the stepping motor driver (3) are connected to each other.

4. The stepping motor abnormality detecting device (30) according to any one of claims 1 to 3, further comprising a bi-directional valve (5) that is configured to operate by the stepping motor (4), wherein

the first timing is set as a timing immediately after the bi-directional valve (5) starts operating, and
the second timing is set as a timing immediately before the bi-directional valve (5) stops operating.

5. The stepping motor abnormality detecting device a(30) ccording to any one of claims 1 to 4, wherein the determiner (109) is configured to determine that there is an abnormality in the operation of the stepping motor (4) in a case where the second current level is out of a predetermined range.

[Figure 1]

[Figure 2]

[Figure 3]

DRIVE PULSE A

(1)

$\tau$    $\tau$

DRIVE PULSE B

(2)

VOLTAGE c

(3)

VOLTAGE b

SAMPLING TIMING

[Figure 4]

[Figure 5]

[Figure 6]

DRIVE PULSE A

(1)

T1    T2

DRIVE PULSE B

(2)

τ    τ

(3)

VOLTAGE c

VOLTAGE b

B

SAMPLING TIMING    SAMPLING TIMING

**REFERENCES CITED IN THE DESCRIPTION**

**Patent documents cited in the description**

- JP 2006118642 A
- JP 11187697 A